# FASCICULE DE BREVET EUROPEEN

(11) **EP 1 559 183 B1**
(45) Date de publication et mention de la délivrance du brevet: **18.04.2018**
(21) Numéro de dépôt: 03782511.4
(22) Date de dépôt: 28.10.2003
(51) Int. Cl.: H02K 15/06, H02K 15/00

(54) **PROCEDE ET DISPOSITIF D'INSERTION D'UN ENROULEMENT DANS UN STATOR, AVEC STRATIFICATION DU CHIGNON**
VERFAHREN UND VORRICHTUNG ZUM EINZIEHEN VON SPULEN IN EIN STATORBLECHPAKET MIT STRATIFIKATWICKLUNG
METHOD AND DEVICE FOR INSERTING A WINDING INTO A STATOR WITH STRATIFICATION OF THE COIL

(30) Priorité: 28.10.2002 FR 0213430
(43) Date de publication de la demande: 03.08.2005
(73) Titulaire: VALEO EQUIPEMENTS ELECTRIQUES MOTEUR, 94017 Créteil Cedex (FR)
(72) Inventeur: DEFEBVIN, Alain, F-62630 Cormont (FR); JAZE, Michel, F-62630 Frencq (FR); RAMET, Vincent, F-62630 Etaples (FR)
(74) Mandataire: Gamonal, Didier
(86) Numéro de dépôt international: PCT/FR2003/003216
(87) Numéro de publication internationale: WO 2004/040739

(56) Documents cités:
- DE-A- 2 101 044
- US-A- 3 753 282
- US-A- 3 841 133
- US-A- 4 741 098

## Description

### Domaine de l'invention

L'invention concerne en général les stators de machines électriques tournantes et les procédés de fabrication de ces stators.

### Etat de la technique

Les documents US4741098, DE2101044, US3841133 et US3753282 divulguent des exemples de réalisation de dispositifs pour insérer des enroulements dans des encoches d'un stator.

L'invention concerne selon un premier aspect un procédé d'insertion d'un enroulement comprenant des demi-phases supérieure et inférieure, dans des encoches pratiquées sur la face radiale intérieure du paquet de tôles d'un stator d'axe X-X', comprenant les étapes suivantes :
a/ production des demi-phases supérieure et inférieure, comprenant chacune une superposition de spires en étoile présentant chacune une pluralités de lobes en saillie vers l'extérieur de la spire reliées par des parties radialement internes, les spires de la demi-phase supérieure étant décalées angulairement relativement aux spires de la demi-phase inférieure, la demi-phase supérieure étant disposée au-dessus de la demi-phase inférieure,
b/ transfert des demi-phases supérieure et inférieure sur un outil d'insertion,
c/ transfert de l'outil d'insertion sous une face axiale inférieure du paquet de tôles du stator, les spires en étoile étant centrées sur l'axe du stator et s'étendant dans des plans perpendiculaires à cet axe ou proche de la perpendiculaire,
d/ insertion des demi-phases supérieure et inférieure dans les encoches par torsion progressive des lobes et basculement de ces lobes dans une direction parallèle à l'axe X-X', jusqu'à ce que les spires de la demi-phase supérieure remplissent les encoches correspondantes sur toute la longueur de ces encoches,
e/ basculement des parties radialement internes des spires de la demi-phase supérieure sur une face axiale supérieure du paquet de tôles, pour former le chignon supérieur du stator,
f/ poursuite de l'insertion des spires de la demi-phase inférieure par torsion et basculement jusqu'à ce que les spires de la demi-phase inférieure remplissent les encoches correspondantes sur toute la longueur de ces encoches,
g/ basculement des parties radialement internes des spires de la demi-phase inférieure sur la face axiale supérieure.

L'invention, dans un deuxième aspect, concerne un dispositif permettant la mise en oeuvre du procédé mentionné ci-dessus, comprenant un organe de maintien en position du paquet de tôles, et un outil d'insertion disposé en dessous d'une face axiale inférieure du paquet de tôles, l'outil d'insertion comprenant des lames longitudinales parallèles, présentant des extrémités supérieures libres, arrangées en cercle et traversant les lobes des spires des demi-phases supérieure et inférieure, et un champignon disposé au centre des lames, le champignon et les lames étant mobiles longitudinalement, de façon mutuellement indépendante, selon l'axe du stator, à partir d'une position de départ située sous le paquet de tôles, dans laquelle les spires en étoiles sont centrées sur l'axe du stator et s'étendent perpendiculairement à cet axe ou proche de la perpendiculaire, les lames venant glisser en regard des encoches et le champignon poussant les spires dans les encoches par torsion progressive des lobes des spires et basculement de ces lobes parallèlement à l'axe, le dispositif d'insertion comprenant également des moyens pour basculer les parties radialement intérieure des spires des demi-phases inférieure et supérieure sur une face axiale supérieure du paquet de tôles par-dessus les extrémités supérieures des lames.

Des procédés et des dispositifs de mise en oeuvre de ce type sont connus de l'art antérieur. Les dispositifs comprennent deux séries de lames, des lames plus courtes associées à la demi-phase supérieure et des lames plus longues associées à la demi-phase inférieure. A l'étape d/ du procédé, les lames adoptent une position d'arrêt dans laquelle les extrémités libres des lames courtes arrivent au niveau de la face supérieure du paquet de tôle, les lames longues se prolongeant plusieurs centimètres au delà de cette face vers le haut.

Le basculement des parties radialement internes des spires de la demi-phase supérieure à l'étape e/ est réalisé à l'aide du champignon, celui-ci poussant ces spires axialement vers le haut. Quand les parties radialement internes des spires arrivent au niveau de l'extrémité libre des lames courtes, ces parties radialement internes basculent par-dessus les extrémités libres des lames courtes et sont poussées sur la face supérieure du paquet de tôles.

Après basculement, les parties radialement internes des spires sont en désordre. L'encombrement du chignon ainsi formé n'est pas bien maîtrisé. Par ailleurs, ce chignon présente de nombreux croisements de spires. Il y a en conséquence un risque important de court-circuit entre spires.

### Objet de l'invention

Dans ce contexte, la présente invention a pour but de pallier les défauts mentionnés ci-dessus.

A cette fin, le procédé de l'invention, par ailleurs conforme à la définition générique qu'en donne le préambule ci-dessus, est essentiellement caractérisé en ce que le basculement des parties radialement internes des spires de la demi-phase supérieure sur la face axiale supérieure du paquet de tôle à l'étape e/ est réalisé à l'aide d'organes de stratification tirant radialement les parties radialement internes des spires de l'intérieur vers l'extérieur.

Dans un mode de réalisation possible du procédé de l'invention, l'outil d'insertion comprend des lames longitudinales parallèles arrangées en cercle, présentant des extrémités supérieures libres, et traversant les lobes des demi-phases supérieure et inférieure, et un champignon disposé au centre des lames, le champignon et les lames étant mobiles longitudinalement, de façon indépendantes, l'insertion des spires dans les encoches étant réalisée par déplacement du champignon et des lames vers le haut suivant l'axe du stator, les lames venant glisser en regard des encoches et le champignon poussant les spires, les lames se déplaçant à l'étape d/ d'une position de départ jusqu'à une position d'arrêt axialement relativement plus haute, le procédé comprenant entre les étapes d/ et e/ l'étape suivante : h/ déplacement vers le bas des lames jusqu'à une position intermédiaire, relativement plus basse que la position d'arrêt, pour permettre le basculement des parties radialement internes des spires de la demi-phase supérieure.

Avantageusement, en fin d'étape d/, les parties radialement internes de toutes les spires de la demi-phase supérieure sont situées axialement au-dessus de la face axiale supérieure du paquet de tôles.

De préférence, les extrémités radialement internes de toutes les spires de la demi-phase inférieure sont situées axialement au dessus de la face axiale supérieure du paquet de tôles en fin d'étape f/.

Par exemple, les parties radialement internes des spires des demi-phases supérieure et inférieure sont stratifiées axialement entre le champignon et les lames pendant la course du champignon et des lames vers le haut aux étapes d/ et f/.

Avantageusement, les extrémités libres des lames, dans la position intermédiaire de ces lames, sont situées axialement à un niveau proche de la face supérieure du paquet de tôles.

De préférence, l'étape g/ est réalisée à un poste différent des étapes d/ à f/ et h/, à l'aide d'un mors à expansion.

Le dispositif de l'invention, lui aussi conforme à la définition générique qu'en donne le préambule ci-dessus, est essentiellement caractérisé en ce que les dits moyens comprennent un dispositif de stratification disposé au-dessus du paquet de tôles, muni d'organes de stratification tirant radialement les parties radialement internes des spires de la demi-phase supérieure de l'intérieur vers l'extérieur.

Avantageusement, le dispositif de stratification comprend une couronne de guidage fixe entourant le paquet de tôles et munie de rainures de guidage, une couronne d'actionnement superposée à la couronne de guidage munie de rainures d'actionnement, et un actionneur déplaçant sélectivement en rotation la couronne d'actionnement relativement à la couronne de guidage, les organes de stratification étant des doigts coulissant dans les rainures de guidage et comprenant des pions engagés dans les rainures d'actionnement .

De préférence, les rainures de guidages sont radiales et les rainures d'actionnement sont obliques relativement aux rainures de guidage.

Par exemple, le champignon comprend une partie basse cylindrique de diamètre correspondant au diamètre intérieur du paquet de tôles et une partie haute solidaire d'une face supérieure de la partie basse, la partie haute formant un nez qui définit avec les lames un espace annulaire calibré de stratification des parties radialement internes des spires .

Avantageusement, l'espace annulaire présente une épaisseur radiale correspondant au diamètre du fil constituant les spires.

De préférence, la partie haute du champignon présente des surfaces de guidage supérieure et inférieure guidant respectivement les parties radialement internes des spires des demi-phases supérieure et inférieure vers l'espace annulaire.

Par exemple, les surfaces de guidage supérieure et inférieure sont constituées de pans coupés de la partie haute s'étendant vers le bas et l'extérieur à partir d'une face libre supérieure de la partie haute, les pans coupés de la surface de guidage inférieure étant décalés angulairement relativement à ceux de la surface de guidage supérieure et découpés plus profondément dans la partie haute que ceux de la surface de guidage supérieure.

Avantageusement, les extrémités supérieures des lames arrivent toutes au même niveau axial.

### Présentation sommaire des dessins

D'autres caractéristiques et avantages de l'invention ressortiront clairement de la description qui en est faite ci-dessous, à titre indicatif et nullement limitatif, en référence aux figures annexées, parmi lesquelles :
- la figure 1 est une vue de dessus des demi-phases supérieure et inférieure enroulées autour des lames d'un outil d'insertion,
- la figure 2 est une vue en perspective de l'intérieur du paquet de tôle, l'outil d'insertion du dispositif d'insertion de l'invention étant représenté en position de départ, le dispositif de stratification n'étant pas représenté,
- la figure 3 est une représentation schématique, en coupe axiale, du dispositif d'insertion de la figure 2, l'outil d'insertion étant représenté en position de départ,
- la figure 4 est une vue équivalente à la figure 3, en fin d'étape d/ du procédé d'insertion, c'est-à-dire quand les spires de la demi-phase supérieure remplissent complètement les encoches correspondantes,
- la figure 5 est une vue équivalente à la figure 3, en fin d'étape h/ du procédé d'insertion, c'est-à-dire quand les lames sont descendues à leur position intermédiaire,
- la figure 6 est une vue équivalente à la figure 3, en fin d'étape e/ du procédé d'insertion, c'est-à-dire quand les organes de stratification ont fait basculer les parties radialement internes des spires de la demi-phase supérieure,
- la figure 7 est une vue équivalente à la figure 3, en fin d'étape f/ du procédé d'insertion, c'est-à-dire quand les spires de la demi-phase inférieure remplissent complètement les encoches correspondantes,
- la figure 8 est identique à la figure 7, à l'exception du fait que l'outil d'insertion est revenu à sa position de départ, le stator étant prêt à être déplacé vers un autre poste, auquel l'étape g/ du procédé d'insertion sera réalisée,
- les figures 9 et 10 sont respectivement une vue de dessus et une vue en coupe axiale suivant les flèches X de la couronne de guidage du dispositif de stratification de la figure 3,
- les figures 11 et 12 sont respectivement une vue de dessous et une vue en coupe axiale suivant les flèches XII de la couronne d'actionnement du dispositif de stratification de la figure 3,
- les figures 13 et 14 sont respectivement une vue de dessous et une vue en coupe longitudinale selon les flèche XIV du doigt de stratification du dispositif de stratification de la figure 3, et
- les figures 15 et 16 sont respectivement une vue en coupe axiale du champignon de la figure 3, et une vue de dessus de la partie haute de ce champignon, les lames étant représentées sur la figure 15 pour délimiter l'espace annulaire de stratification.

### Description d'un mode préférentiel de l'invention

Le procédé d'insertion vise à insérer plusieurs enroulements de phase 1 dans des encoches 24 pratiquées sur la face radiale intérieure 21 du paquet de tôles 20 d'un stator d'axe de symétrie X-X'.

L'invention sera décrite en référence à un stator comprenant trois enroulements 1 du type ondulé réparti, ces enroulements étant insérés un à un (phase par phase) dans les encoches 24 du paquet de tôle 20. Ce bobinage de type ondulé réparti peut consister en un montage de type couplage étoile ou en un montage de type couplage triangle ou encore par exemple, en un montage comportant deux bobinages triphasés couplés en étoile et triangle.

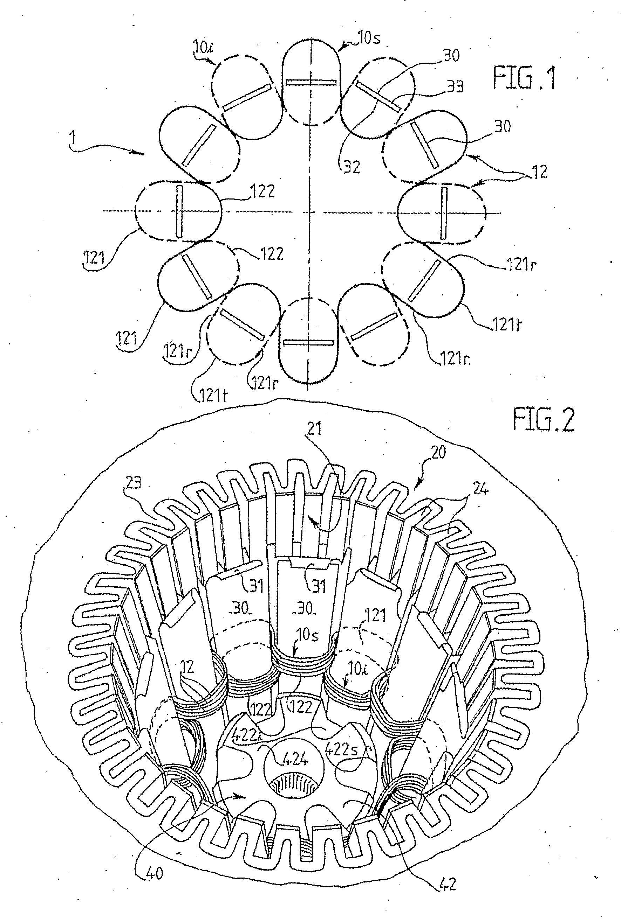

Le procédé comprend, pour chaque enroulement de phase, les étapes suivantes.
a/ Production de l'enroulement 1 à partir d'un fil de cuivre à un premier poste, cet enroulement comprenant des demi-phases supérieure et inférieure 10s et 10i, représentées sur la figure 1.

Chaque demi-phase comprend une superposition de spires planes 12 identiques en étoile, présentant chacune une pluralité de lobes 121 en saillie vers l'extérieur de la spire 12 constituant les branches de l'étoile, ces lobes étant reliés par des parties radialement internes 122.

Les lobes 121 sont en nombre égal au nombre de paires de pôle du stator, et sont répartis régulièrement autour de l'étoile. Ces lobes 121 sont tous identiques et présentent une forme allongée dans la direction radiale, leur longueur suivant cette direction radiale étant sensiblement supérieure à la longueur des encoches 24 du paquet de tôles 20. Ils comprennent chacun deux branches radiales 121r droites et parallèles, réunies à des extrémités respectives opposées au centre de la spire par une branche transversale 121t en arc de cercle de concavité tournée vers le centre de la spire 12.

Les parties radialement internes 122 réunissent deux lobes 121 voisins en suivant le tour de la spire, et sont de simples arc de cercle dont le côté convexe est tourné vers le centre de la spire 12. Ces parties radialement internes 122 réunissent les branches radiales 121r contiguës des deux lobes 121, en reliant des extrémités des dites branches situées du côté du centre de la spire 12.

Les spires 12 d'une même demi-phase se superposent parfaitement.

La demi-phase supérieure 10s est plaquée au dessus de la demi-phase inférieure 10i, les axes de symétries des deux demi-phases étant alignés, de telle sorte que la demi-phase supérieure 10s est décalée axialement vers le haut relativement à la demi-phase inférieure.

Les spires 12 de la demi-phase supérieure 10s sont également décalées angulairement relativement aux spires 12 de la demi-phase inférieure 10i, chaque lobe 121 de la demi-phase supérieure 10s étant intercalé angulairement entre deux lobes 121 de la demi-phase inférieure 10i.
b/ Transfert des demi-phases supérieure et inférieure 10s et 10i sur un outil d'insertion 2.
c/ Transfert de l'outil d'insertion 2 sous une face axiale inférieure 22 du paquet de tôles 20 du stator, les spires 12 en étoile étant centrées sur l'axe X-X' du stator et s'étendant dans des plans perpendiculaires à cet axe ou proche de la perpendiculaire.

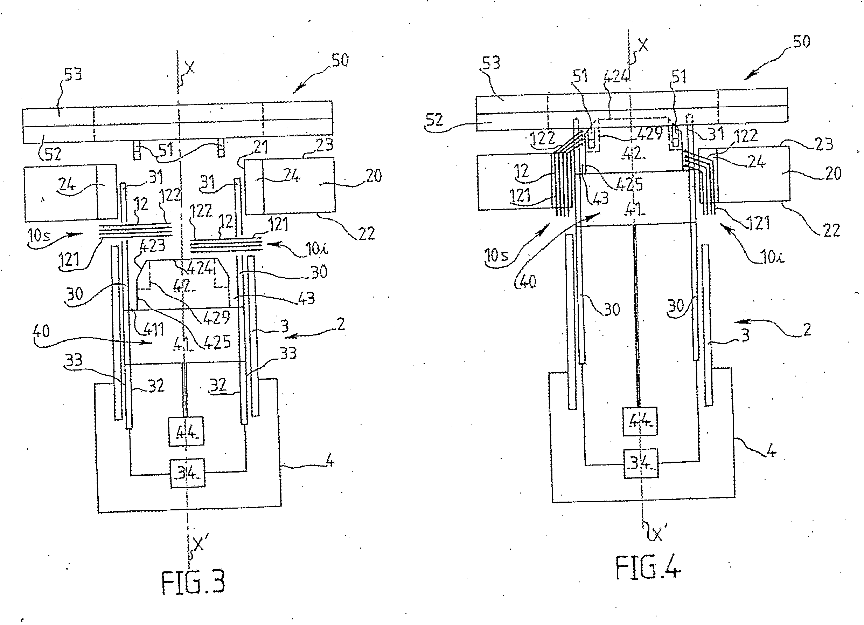

Comme le montre la figure 3, la demi-phase supérieure 10s est positionnée relativement plus près de la face axiale inférieure 22 que la demi-phase inférieure 10i.

Les branches transversales 121t des lobes sont disposées sous les encoches 24, les branches radiales 121r et les parties radialement internes 122 s'étendant sous la partie centrale vide du paquet de tôles 20.
d/ Insertion des demi-phases supérieure et inférieure 10s et 10i en même temps dans les encoches 24, par torsion progressive des branches radiales 121r des lobes 121 à partir de l'extérieur et basculement de ces branches radiales 121r dans une direction parallèle à l'axe X-X'.

La branche transversale 121t des lobes 121 vient se placer sur la face axiale inférieure 22 du paquet de tôles 20 et formera le chignon inférieur du stator.

Les deux branches radiales 121r de chaque lobe 121 sont au départ entièrement dans un plan perpendiculaire à l'axe X-X'. La partie de la branche radiale 121r la plus proche de la branche transversale se coude vers le bas et est insérée en même temps dans l'encoche 24 qui se trouve en regard, le reste de la branche radiale restant sensiblement perpendiculaire à l'axe X-X' ou légèrement incliné par rapport à celui-ci et se déplaçant vers le haut d'une hauteur égale à la longueur de la partie coudée.

Progressivement, une partie de plus en plus longue de la branche radiale 121r se coude et est insérée dans l'encoche, le reste de la branche se déplaçant proportionnellement vers le haut, jusqu'à ce que l'encoche 24 soit occupée sur toute sa longueur.

A ce stade du procédé, représenté selon la figure 4, les branches 121r sont insérées dans les encoches 24 sur quasiment toutes leur longueur, et les parties radialement internes 122 des spires 12 sont légèrement en saillie vers l'axe X-X' relativement à la face radiale intérieure 21 du paquet de tôles 20, à proximité de celle-ci.
e/ Basculement des parties radialement internes 122 des spires 12 de la demi-phase supérieure 10s vers l'extérieur, sur une face axiale supérieure 23 du paquet de tôle 20, pour former le chignon supérieur du stator.

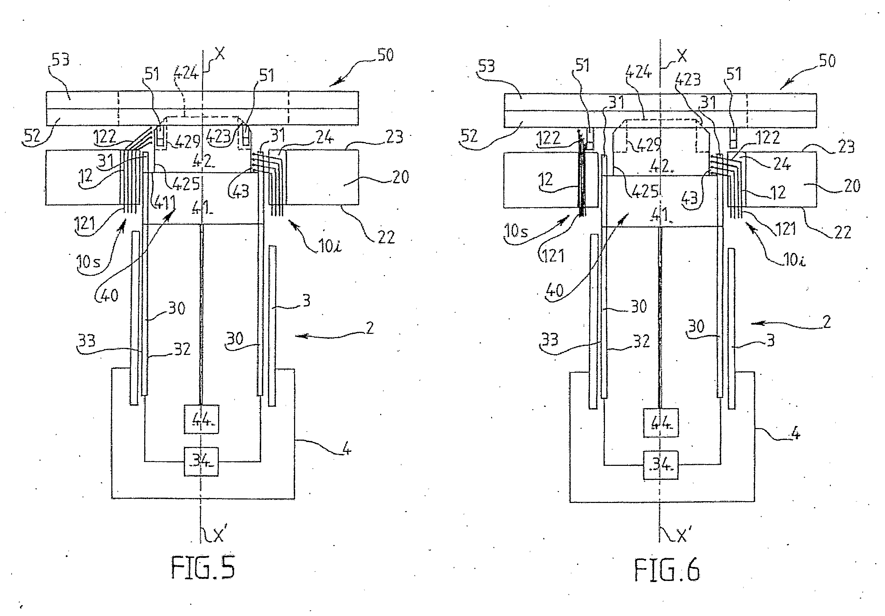

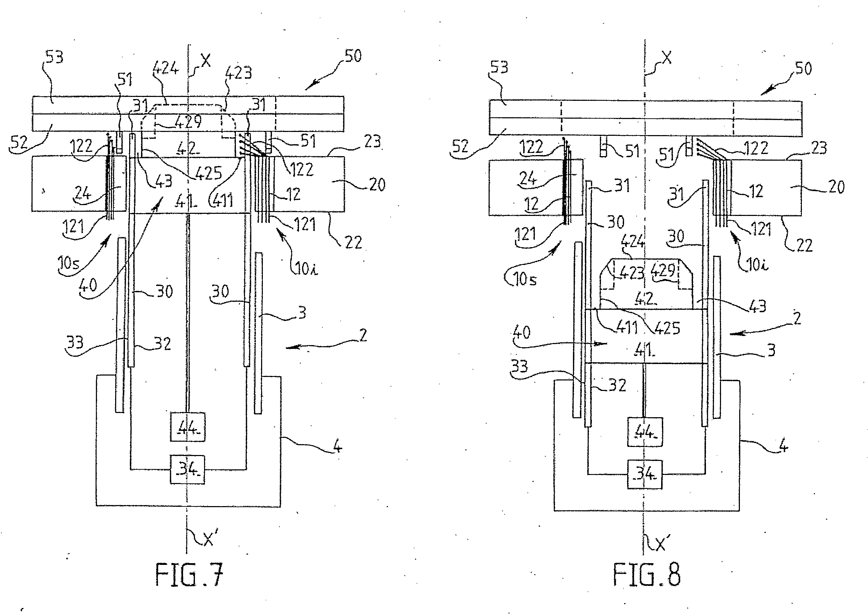

Cette opération est effectuée en faisant passer les parties radialement internes 122 d'un plan sensiblement perpendiculaire à l'axe X-X' ou légèrement incliné par rapport à celui-ci à un plan pratiquement parallèle à l'axe X-X' comme le montre la figure 6. Après basculement, ces dites parties forment une première couronne au-dessus des extrémités supérieures des encoches 24.
f/ Poursuite de l'insertion des spires 12 de la demi-phase inférieure 10i par torsion et basculement des lobes 121 jusqu'à ce que ces spires 12 remplissent les encoches 24 correspondantes sur toute leur longueur, cette situation étant représentée sur la figure 7.
g/ Basculement des parties radialement interne 122 des spires 12 de la demi-phase inférieure 10i sur la face axiale supérieure 23, comme le montre la figure 8.

Ces dites parties viennent se plaquer contre les parties radialement interne 122 de la demi-phase supérieure 10s, et forment une deuxième couronne au-dessus des extrémités supérieures des encoches 24, de rayon plus faible que la première couronne, et décalée angulairement d'environ 30 degrés par rapport à cette première couronne.

Les étapes a/ à g/ sont ensuite répétées pour les deux autres phases du stator. Le chignon supérieur comprend donc six couronnes de rayons décroissants, constituées des parties radialement internes des six demi-phases.

Selon l'invention, le basculement des parties radialement internes 122 des spires de la demi-phase supérieure 10s sur la face axiale supérieure 23 du paquet de tôles 20 à l'étape e/ du procédé décrit ci-dessus, est réalisé à l'aide d'organes de stratification 51 tirant radialement ces dites parties de l'intérieur vers l'extérieur.

Cette manière d'opérer permet de déplacer les parties radialement internes 122 de façon plus ordonnée que dans l'art antérieur.

L'avantage obtenu ainsi se comprend encore mieux quand on considère une autre caractéristique de l'invention, qui est que les parties radialement internes 122 des spires 12 des demi-phases supérieure et inférieure 10s et 10i sont stratifiées axialement pendant les étapes d/ et f/.

Dans leur position de départ, les spires 12 de chaque demi-phase sont superposées les unes aux autres. Les parties radialement internes 122 des spires d'une même demi-phase sont donc empilées verticalement, c'est-à-dire stratifiées. Cette stratification est maintenue pendant les étapes d/ et f/, alors que les branches radiales 121r des lobes 121 subissent une torsion.

En fin d'étape d/, les parties radialement internes 122 de toutes les spires 12 de la demi-phase supérieure 10s sont situées axialement au-dessus de la face axiale supérieure 23 du paquet de tôles 20, comme on peut le voir sur la figure 5, et sont toujours stratifiées.

Le mouvement radial de l'extérieur vers l'intérieur des organes de stratification 51 à l'étape e/ déplace les parties radialement internes 122 stratifiées sans perturber la stratification. On obtient ainsi un chignon bien ordonné et bien compact.

L'organe de stratification 51 est, au début de l'étape e/, disposé relativement plus proche de l'axe X-X' que les parties radialement internes 122.

En fin d'étape f/, les parties radialement internes 122 de toutes les spires 12 de la demi-phase inférieure 10i sont situées axialement au-dessus de la face axiale supérieure 23 du paquet de tôles 20, comme on peut le voir sur la figure 7, et sont toujours stratifiées.

De façon à raccourcir le temps de cycle pour l'insertion d'une phase dans le paquet de tôles, l'étape g/ est réalisée à un poste différent des étapes d/ à f/ et h/, à l'aide d'un mors à expansion qui, de même que l'organe de stratification 51, tire radialement les parties radialement internes 122 stratifiées de la demi-phase inférieure 10i de l'intérieur vers l'extérieur, en respectant la stratification des dites parties.

On va maintenant décrire en détail un dispositif d'insertion adapté pour mettre en oeuvre le procédé de l'invention.

Ce dispositif comprend un organe de maintien en position du paquet de tôle par bridage, non représenté, l'outil d'insertion 2 disposé en dessous de la face axiale inférieure 22 du paquet de tôle 20, et des moyens pour basculer les parties radialement intérieure 122 des spires 12 des demi-phases inférieure et supérieure 10i et 10s sur la face axiale supérieure 23 du paquet de tôles 20.

L'outil d'insertion 2 comprend des lames longitudinales parallèles 30, présentant des extrémités supérieures libres 31, arrangées en cercle et traversant les lobes 121 des spires 12 des demi-phases supérieure et inférieure 10s et 10i, un champignon 40 disposé au centre des lames 30, des contre-lames 3 disposées en cercle autour des lames 30 et un corps principal 4.

Le cercle formé par les lames 30 est de diamètre correspondant au diamètre intérieur du paquet de tôles 20.

Les lames 30, comme le montre la figure 1, sont au nombre de douze, et sont planes et minces. Elles présentent chacune des faces planes principales intérieure et extérieure 32 et 33 opposées, la face intérieure 32 étant tournée vers le centre du cercle. Elles sont toutes de même longueur, les extrémités supérieures 31 des lames 30 étant toutes situées dans le même plan.

Les lobes 121 des spires 12 de la demi-phase supérieure 10s entourent six premières lames 30 par l'extérieur. Les parties radialement internes 122 reliant ces lobes 121 entourent six autres lames 30 par l'intérieur, ces six autres lames étant interposées entre les six premières lames. La spire 12, en suivant le cercle formé par les lames 30, passe donc alternativement du côté extérieur puis du côté intérieur des lames 30 successives.

Le corps principal 4 de l'outil d'insertion 2 est fixe relativement au stator, les contre-lames 3 étant rigidement fixées sur ce corps principal 4 et s'étendant parallèlement à l'axe X-X'.

Le champignon 40 et les lames 30 sont mobiles suivant la direction longitudinale des lames 30, de façon mutuellement indépendante. A cet effet, l'outil comprend des premier et second moteurs 34 et 44 dédiés respectivement aux lames 30 et au champignon 40, permettant de déplacer ceux-ci suivant la direction longitudinale dans les deux sens opposés.

Les moyens de stratification comprennent un dispositif de stratification 50 disposé au-dessus du paquet de tôles 20, portant lui-même les organes de stratification 51 tirant radialement les parties radialement internes 122 des spires 12 de la demi-phase supérieure 10s de l'intérieur vers l'extérieur à l'étape e/ du procédé.

Ce dispositif de stratification 50 comprend une couronne de guidage fixe 52 entourant le paquet de tôles 20 et munie de rainures de guidage 521, une couronne d'actionnement 53 superposée à la couronne de guidage 52 munie de rainures d'actionnement 531, et un actionneur, non représenté, déplaçant sélectivement en rotation la couronne d'actionnement 53 relativement à la couronne de guidage 52.

La couronne de guidage 52 est disposée dans un plan perpendiculaire à l'axe X-X' et porte les rainures de guidages 521 sur une face plane supérieure 522 opposée au paquet de tôle 20.

La couronne d'actionnement 53 est également disposée dans un plan perpendiculaire à l'axe X-X' et porte les rainures d'actionnement 531 sur une face plane inférieure 532 reposant sur la face supérieure 522 de la couronne de guidage 52.

La couronne de guidage 52 est disposée relativement plus proche du paquet de tôle 20 que la couronne d'actionnement 53.

Les couronnes de guidage et d'actionnement 52 et 53 présentent les mêmes diamètres intérieur et extérieur et sont parfaitement superposées. Elles comprennent chacune un espace évidé central en disque de diamètre correspondant au diamètre intérieur du paquet de tôles 20. Ces couronnes sont centrées sur l'axe X-X'.

Les organes de stratification 51 sont des doigts en L coulissant dans les rainures de guidage 521 et comprenant des pions 511 engagés dans les rainures d'actionnement 531.

Ces doigts sont au nombre de six, un pour chaque partie radialement interne 122 des spires 12. Les rainures de guidage 521 et d'actionnement 531 sont également au nombre de six chacune.

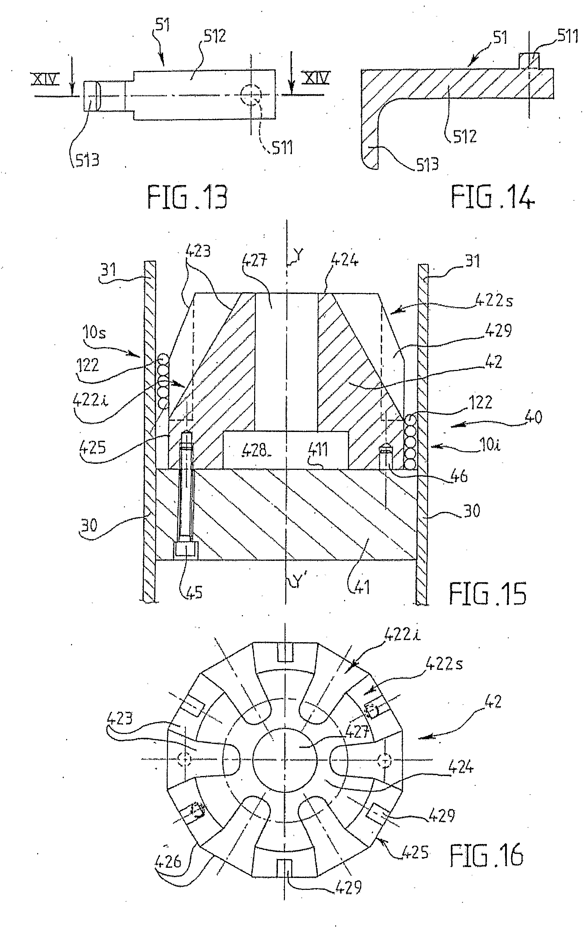

Comme le montre la figure 13, chaque doigt 51 comprend un bras transversal droit 512 et un bras vertical droit 513 s'étendant à angle droit relativement au bras transversal 512 et solidaire de celui-ci. Les bras transversaux et verticaux 512 et 513 sont de section rectangulaire, pratiquement constante, perpendiculairement à leurs directions longitudinales respectives. Le bras vertical 513 est relativement plus étroit et moins épais que le bras transversal 512.

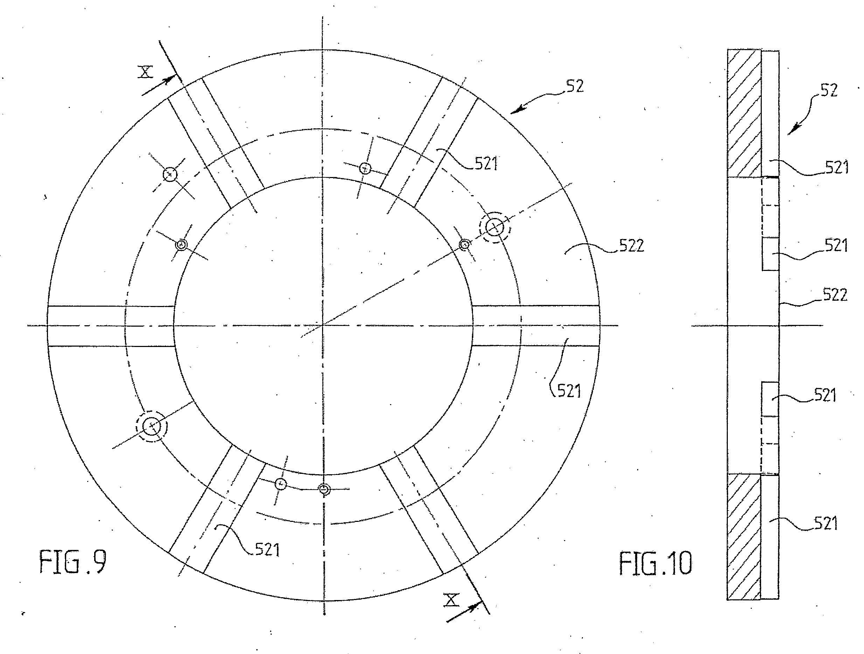

Comme le montre la figure 9, les rainures de guidages 521 sont rectilignes, radiales et s'étendent du bord radial intérieur au bord radial extérieur de la couronne de guidage, c'est-à-dire sur toute la largeur radiale de cette couronne.

Le bras transversal 512 est engagé dans la rainure de guidage 521 et fait saillie par une partie d'extrémité vers le centre au delà du bord radial interne de la couronne de guidage, le bras vertical 513 s'étendant vers le bas à partir de cette partie d'extrémité. Le pion 511 est porté par le bras transversal 512 et est tourné vers la couronne d'actionnement.

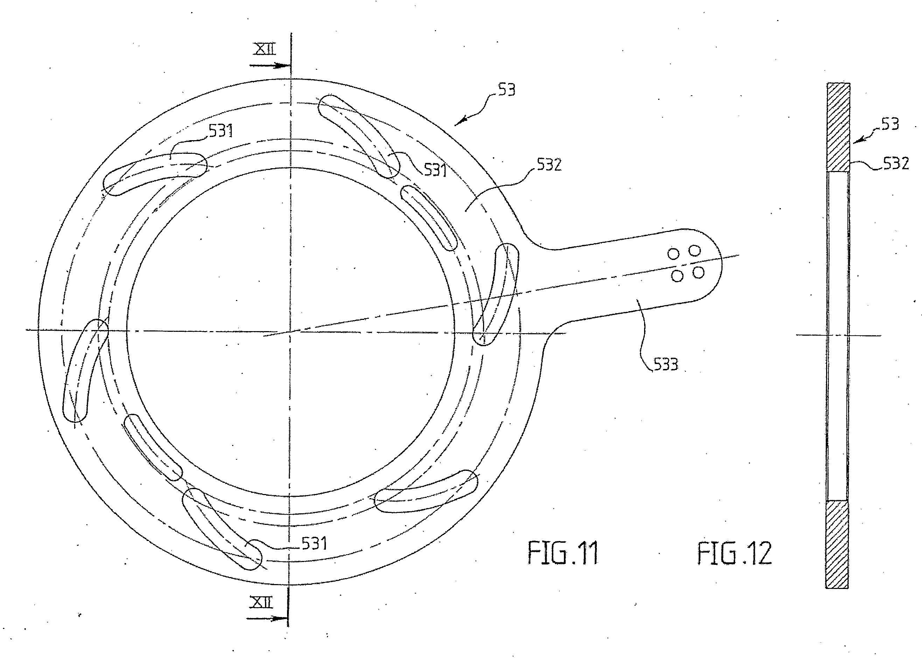

Les rainures d'actionnement 531 représentées sur la figure 11, présentent toutes la forme d'un arc de cercle et s'étendent en oblique relativement aux rainures de guidage 521.

L'actionneur agit sur la couronne d'actionnement 53 par l'intermédiaire d'une queue 533 faisant saillie vers l'extérieur à partir du bord radialement externe de cette couronne.

Quand l'actionneur fait pivoter la couronne d'actionnement 53, les rainures d'actionnement 531 se déplacent relativement aux rainures de guidage 521, et les pions 511 qui sont engagés dans les rainures d'actionnement 531 subissent un déplacement radial de ce fait. Ces pions 511 entraînent les doigts 51 en mouvement radialement, vers l'axe X-X' ou dans le sens opposé en fonction du sens de rotation de la couronne d'actionnement 53.

Le champignon 40, représenté sur les figures 15 et 16, comprend une partie basse cylindrique 41 d'axe de symétrie Y-Y' et de diamètre correspondant au diamètre intérieur du paquet de tôles 20, et une partie haute 42 solidaire d'une face axiale supérieure 411 de la partie basse 41.

La partie haute 42 forme un nez s'étendant au centre de la face supérieure 411, qui définit avec les lames 30 un espace annulaire périphérique calibré 43 de stratification des parties radialement internes 122 des spires 12.

Ce nez présente, perpendiculairement à l'axe Y-Y', la forme d'un dodécagone. Il s'inscrit dans un cylindre d'axe Y-Y' de diamètre inférieur au diamètre de la partie basse 41. Le nez est délimité par une face libre supérieure 424 opposée à la partie basse 41, perpendiculaire à l'axe Y-Y', et par une paroi latérale 425 à douze facettes 426, chaque facette étant parallèle à l'axe Y-Y'.

L'espace annulaire 43 est délimité par la face supérieure de la partie basse 41, la paroi latérale 425 du nez, et les faces intérieures 32 des lames 30. Son épaisseur radiale, c'est-à-dire l'écartement entre la paroi latérale 425 du nez et les faces intérieures 32 des lames 30, correspond au diamètre du fil constituant les spires 12.

La partie haute 41 du champignon 40 présente des surfaces de guidage supérieure et inférieure 422s et 422i guidant respectivement les parties radialement internes 122 des spires des demi-phases supérieure et inférieure 10s et 10i vers l'espace annulaire 43.

Ces surfaces de guidage supérieure et inférieure 422s et 422i sont constituées de douze pans coupés 423, correspondant chacun à une facette 426 de la paroi latérale 425.

Ces pans coupés 423 sont inclinés vers le bas et l'extérieur à partir de la face libre supérieure 424 de la partie haute 42, et débouchent chacune sur une facette 426 de la paroi latérale 425.

Les pans coupés 423 de la surface de guidage inférieure 422i sont décalés angulairement et découpés plus profondément dans le nez 42 que ceux de la surface de guidage supérieure 422s.

Les pans coupés 423 de la surface de guidage inférieure 422i présentent des bords supérieurs disposés sur un premier cercle sur la face libre supérieure 424. Les pans coupés 423 de la surface de guidage supérieure 422s présentent des bords supérieurs disposés sur un second cercle de rayon plus grand que le premier sur la face libre supérieure 424.

Les pans coupés 423 de la surface de guidage inférieure 422i s'étendent jusqu'à des bords inférieurs formant un dodécaèdre bas sur la paroi latérale 425.

Les pans coupés 423 de la surface de guidage supérieure 425 s'étendent jusqu'à des bords inférieurs formant un dodécaèdre haut sur la paroi latérale 425, ce dodécaèdre haut étant, suivant l'axe Y-Y', relativement plus proche de la face libre supérieure 424 que le dodécaèdre bas.

Six encoches 429 sont ménagées à la périphérie de la partie haute 42 du champignon. Ces encoches 429 s'étendent sur une grande partie de la hauteur axiale de la partie haute 42, et sont ouvertes vers le haut et vers l'extérieur. Elles débouchent vers le haut sur les pans coupés 423 de la surface de guidage supérieure 422s, et vers l'extérieur sur la surface latérale 425. Chaque encoche 429 est associée à un pan coupé 423 différent.

Les sections de ces encoches 429 correspondent à celles des bras verticaux 512 des doigts de stratification 51.

Enfin, la partie haute 42 du champignon est percée par un orifice central 427 le traversant entièrement suivant l'axe Y-Y'. Cet orifice débouche dans un lamage 428 du côté de la partie basse 41 du champignon. Les parties haute et basse 42 et 41 sont assemblées à l'aide de vis 45 traversant la partie basse 42 et vissée dans des orifices filetés ménagés dans la partie haute 41. Des pions 46, portés par la face supérieure 411 de la partie basse 41 sont engagés dans des trous correspondants ménagés dans la partie haute 42.

La partie basse 41 du champignon comprend des nervures en creux axiales dans lesquelles les lames 30 sont engagées et coulissent librement, ces nervures étant ménagées sur une face radiale extérieure de cette partie basse 41.

On va maintenant décrire le fonctionnement du dispositif d'insertion de l'invention aux différentes étapes du procédé d'insertion décrit plus haut.

Dans la position de départ, les lames 30 et le champignon 40 sont situés sous le paquet de tôles 20, les lames 30 pointant leurs extrémités supérieures 31 vers ce paquet de tôles 20, et le cercle formé par les lames 30 étant centré sur l'axe X-X'.

L'insertion des demi-phases supérieure et inférieure 10s et 10i à l'étape d/ du procédé est effectuée en déplaçant les lames 30 et le champignon 40 vers le haut suivant l'axe X-X', les lames 30 venant glisser sur la face radiale intérieure 21 du paquet de tôles 20, en regard des encoches 24, et le champignon 40 poussant les spires 12 dans les encoches 24 par torsion, de la façon qui a été décrite ci-dessus. Les contre-lames 3 guident les lames 30 pendant leur mouvement. Les lames 30 servent de guide pour les branches radiales 121r des lobes 121 en cours de torsion.

Pendant le mouvement vers le haut des lames 30 et du champignon 40, les parties radialement internes 122 des demi-phases supérieure et inférieure 10s et 10i glissent respectivement sur les surfaces de guidage 422s et 422i et viennent se stratifier dans l'espace annulaire calibré 43.

Les parties radialement internes 122 de la demi-phase inférieure 10i occupent le fond de cet espace et reposent sur la partie basse 41 du champignon, comme on le voit sur la figure 16. Les parties radialement internes 122 de la demi-phase supérieure 10s occupent une partie supérieure de l'espace annulaire 43 et reposent sur les parties radialement internes 122 de la demi-phase inférieure 10i.

Les lames 30 se déplacent à l'étape d/ de la position de départ jusqu'à une position d'arrêt dans laquelle les extrémités supérieures 31 des lames 30 sont situées axialement relativement plus haut que la face axiale supérieure 23 du paquet de tôles 20, comme le montre la figure 4.

Parallèlement, le champignon 40 se déplace de sa position de départ jusqu'à une position haute dans laquelle les spires 12 de la demi-phase supérieure 10s remplissent les encoches 24 sur toute leur longueur. Dans cette position haute, la partie haute 42 du champignon est engagée dans les parties centrales évidées des couronnes de guidage et d'actionnement 52 et 53.

Pendant l'étape d/, les doigts de stratifications 51 sont dans une position radialement interne.

En fin d'étape d/, les parties radialement internes 122 de la demi-phase supérieure 10s sont stratifiées contre l'extrémité supérieure 31 des lames 30, le champignon 40 est en position position haute, et les bras verticaux 513 des doigts 51 sont engagés dans les encoches 429 de la partie haute 42 du champignon 40.

Dans cette situation, des faces tournées vers l'extérieur des bras verticaux 513 sont disposées immédiatement en regard des parties radialement internes 122 des spires de la demi-phase supérieure 10s, relativement plus proche de l'axe X-X' que celle-ci

Après la fin de l'étape d/ et avant le début de l'étape e/, les lames 30 se déplacent vers le bas jusqu'à une position intermédiaire, relativement plus basse que la position d'arrêt, pour permettre le basculement des extrémités radialement internes 122 des spires de la demi-phase supérieure 10s par-dessus l'extrémité supérieure 31 des lames 30.

Les extrémités libres 31 des lames 30, dans la position intermédiaire de ces lames, sont situées axialement à un niveau proche de la face axiale supérieure 23 du paquet de tôles 20.

A l'étape e/, les doigts de stratification 51 se déplacent radialement vers l'extérieur, entraînant les parties radialement internes 122 stratifiées disposées en regard du bras vertical 513, jusqu'à une position radialement extérieure proche du fond des encoches 24.

Les parties radialement internes 122 basculent sur la face axiale supérieure 23 du paquet de tôles 20, sans que la stratification de ces parties soit perturbée.

A l'étape f/, les lames 30 se déplacent vers le haut jusqu'à une position d'arrêt supérieure. Le champignon 40 se déplace également vers le haut jusqu'à une position haute supérieure dans laquelle les spires 12 de la demi-phase inférieure 10i remplissent les encoches 24 sur toute leur longueur. Les parties radialement internes 122 de toutes les spires 12 de la demi-phase inférieure 10i sont alors stratifiées contre les extrémités supérieures 31 des lames 30 et situées axialement au dessus de la face axiale supérieure 23 du paquet de tôles 20.

La position d'arrêt supérieure des lames 30 est sensiblement la même que la position d'arrêt. La position haute supérieure du champignon 40 est relativement plus haute que sa position haute.

Après la fin de l'étape f/, les lames 30 et le champignon 40 redescendent jusqu'à leur position de départ. Les doigts de stratification 51 reprennent leur position radialement interne.

Le paquet de tôles 20 muni de ses demi-phases supérieure et inférieure est alors évacué pour que l'étape g/ soit réalisée à un autre poste.

Le paquet de tôles 20 revient ensuite encore deux fois au poste où sont effectués les étapes d/ à f/ et h/ à l'aide du dispositif d'insertion, pour insérer les deux autres phases dans le paquet de tôles.

On conçoit donc bien que le procédé de l'invention permet d'obtenir des stators dont les chignons sont constitués de parties radialement internes bien stratifiées.

L'encombrement de ces chignons est réduit et les courts-circuits entre spires sont considérablement diminués.

La maîtrise de rangement des fils dans le chignon supérieur permet également d'assurer une meilleure ventilation et donc un meilleur refroidissement du chignon.

Pour un chignon de même encombrement, il est possible de mettre un plus grand nombre de spires dans les encoches du stator.

Enfin, le rangement du chignon inférieur est également amélioré, simplement du fait que les spires sont mieux ordonnées du côté supérieur du paquet de tôles.

Bien évidement, l'invention peut être appliquée à des bobinages comprenant plus de trois enroulements.

## Revendications

1. Procédé d'insertion d'un enroulement (1) comprenant des demi-phases supérieure et inférieure (10s, 10i), dans des encoches (24) pratiquées sur la face radiale intérieure (21) du paquet de tôles (20) d'un stator d'axe (X-X'), comprenant les étapes suivantes :
a/ production des demi-phases supérieure et inférieure (10s, 10i), comprenant chacune une superposition de spires (12) en étoile présentant chacune une pluralités de lobes (121) en saillie vers l'extérieur de la spire (12) reliées par des parties radialement internes (122), les spires (12) de la demi-phase supérieure (10s) étant décalées angulairement relativement aux spires de la demi-phase inférieure (10i), la demi-phase supérieure (10s) étant disposée au-dessus de la demi-phase inférieure (10i),
b/ transfert des demi-phases supérieure et inférieure (10s, 10i) sur un outil d'insertion (2),
c/ transfert de l'outil d'insertion (2) sous une face axiale inférieure (22) du paquet de tôles (20) du stator, les spires (12) en étoile étant centrées sur l'axe (X-X') du stator et s'étendant dans des plans perpendiculaires à cet axe ou proche de la perpendiculaire,
d/ insertion des demi-phases supérieure et inférieure (10s, 10i) dans les encoches (24) par torsion progressive des lobes (121) et basculement de ces lobes (121) dans une direction parallèle à l'axe (X-X'), jusqu'à ce que les spires (121) de la demi-phase supérieure (10s) remplissent les encoches (24) correspondantes sur toute la longueur de ces encoches,
e/ basculement des parties radialement internes (122) des spires (12) de la demi-phase supérieure (10s) sur une face axiale supérieure (23) du paquet de tôles (20), pour former le chignon supérieur du stator,
f/ poursuite de l'insertion des spires (12) de la demi-phase inférieure (10i) par torsion et basculement jusqu'à ce que les spires (12) de la demi-phase inférieure (10i) remplissent les encoches (24) correspondantes sur toute la longueur de ces encoches,
g/ basculement des parties radialement internes (122) des spires (12) de la demi-phase inférieure (10i) sur la face axiale supérieure (23),
**caractérisé en ce que** le basculement des parties radialement internes (122) des spires (12) de la demi-phase supérieure (10s) sur la face axiale supérieure (23) du paquet de tôles (20) à l'étape e/ est réalisé à l'aide d'organes de stratification (51) tirant radialement ces dites parties de l'intérieur vers l'extérieur.

2. Procédé selon la revendication 1, **caractérisé en ce que**, en fin d'étape d/, les parties radialement internes (122) de toutes les spires (12) de la demi-phase supérieure (10s) sont situées axialement au-dessus de la face axiale supérieure (23) du paquet de tôles (20).

3. Procédé selon la revendication 1 ou 2, **caractérisé en ce que** les extrémités radialement internes (122) de toutes les spires (12) de la demi-phase inférieure (10i) sont situées axialement au-dessus de la face axiale supérieure (23) du paquet de tôles (20) en fin d'étape f/.

4. Procédé selon l'une quelconque des revendications précédentes, **caractérisé en ce que** l'outil d'insertion (2) comprend des lames longitudinales parallèles (30) arrangées en cercle, présentant des extrémités supérieures libres (31), et traversant les lobes (121) des demi-phases supérieure et inférieure (10s, 10i), et un champignon (40) disposé au centre des lames (30), le champignon (30) et les lames (40) étant mobiles longitudinalement, de façon indépendantes, l'insertion des spires (12) dans les encoches (24) étant réalisée par déplacement du champignon (30) et des lames (40) vers le haut suivant l'axe du stator, les lames (30) venant glisser en regard des encoches (24) et le champignon (40) poussant les spires (12), les lames (30) se déplaçant à l'étape d/ d'une position de départ jusqu'à une position d'arrêt axialement relativement plus haute, et **en ce qu'**il comprend entre les étapes d/ et e/ l'étape suivante :
h/ déplacement vers le bas des lames (30) jusqu'à une position intermédiaire, relativement plus basse que la position d'arrêt, pour permettre le basculement des parties radialement internes (122) des spires (12) de la demi-phase supérieure (10s).

5. Procédé selon la revendication 4, **caractérisé en ce que** les parties radialement internes (122) des spires (12) des demi-phases supérieure et inférieure (10s, 10i) sont stratifiées axialement entre le champignon (40) et les lames (30) pendant la course du champignon (40) et des lames (30) vers le haut aux étapes d/ et f/.

6. Procédé selon la revendication 4 ou 5, **caractérisé en ce que** les extrémités libres (31) des lames (30), dans la position intermédiaire de ces lames (30), sont situées axialement à un niveau proche de la face axiale supérieure (23) du paquet de tôles (20).

7. Procédé selon l'une quelconque des revendications 4 à 6, **caractérisé en ce que** l'étape g/ est réalisée à un poste différent des étapes d/ à f/ et h/, à l'aide d'un mors à expansion.

8. Dispositif d'insertion d'un enroulement (1) comprenant des demi-phases supérieure et inférieure (10s, 10i), dans des encoches (24) pratiquées sur la face radiale intérieure (21) du paquet de tôles (20) d'un stator d'axe (X-X'), les demi-phases supérieure et inférieure (10s, 10i) comprenant chacune une superposition de spires en étoiles (12) présentant chacune une pluralité de lobes (121) faisant saillie vers l'extérieur de la spire (12) reliés par des parties radialement interne (122), les spires (12) de la demi-phase supérieure (10s) étant décalées angulairement relativement aux spires de la demi-phase inférieure (10i) et la demi-phase supérieure (10s) étant disposée au-dessus de la demi-phase inférieure (10i), ce dispositif comprenant un organe de maintien en position du paquet de tôles (20), et un outil d'insertion (2) disposé en dessous d'une face axiale inférieure (21) du paquet de tôles (20), l'outil d'insertion (2) comprenant des lames longitudinales parallèles (30), présentant des extrémités supérieures libres (31), arrangées en cercle et traversant les lobes (121) des spires (12) des demi-phases supérieure et inférieure (10s, 10i), et un champignon (40) disposé au centre des lames (30), le champignon (40) et les lames (30) étant mobiles longitudinalement, de façon mutuellement indépendante, selon l'axe du stator, à partir d'une position de départ située sous le paquet de tôles (20), dans laquelle les spires en étoiles (12) sont centrées sur l'axe (X-X') du stator et s'étendent perpendiculairement à cet axe ou proche de la perpendiculaire, les lames (30) venant glisser en regard des encoches (24) et le champignon (40) poussant les spires (12) dans les encoches (24) par torsion progressive des lobes (121) des spires (12) et basculement de ces lobes (121) parallèlement à l'axe (X-X'), le dispositif d'insertion comprenant également des moyens pour basculer les parties radialement intérieure (122) des spires (12) des demi-phases inférieure et supérieure (10i, 10s) sur une face axiale supérieure (23) du paquet de tôles (20) par-dessus les extrémités supérieures (31) des lames (30), **caractérisé en ce que** les dits moyens comprennent un dispositif de stratification (50) disposé au-dessus du paquet de tôles (20), muni d'organes de stratification (51) construits et agencés pour tirer radialement les parties radialement internes (122) des spires (12) de la demi-phase supérieure (10s) de l'intérieur vers l'extérieur .

9. Dispositif selon la revendication 8, **caractérisé en ce que** le dispositif de stratification (50) comprend une couronne de guidage (52) fixe entourant le paquet de tôles (20) et munie de rainures de guidage (521), une couronne d'actionnement (53) superposée à la couronne de guidage (52) munie de rainures d'actionnement (531), et un actionneur déplaçant sélectivement en rotation la couronne d'actionnement (53) relativement à la couronne de guidage (52), les organes de stratification (51) étant des doigts coulissant dans les rainures de guidage (521) et comprenant des pions (511) engagés dans les rainures d'actionnement (531) .

10. Dispositif selon la revendication 9, **caractérisé en ce que** les rainures de guidages (521) sont radiales et les rainures d'actionnement (531) sont obliques relativement aux rainures de guidage (521).

11. Dispositif selon l'une quelconque des revendications 8 à 10, **caractérisé en ce que** le champignon (40) comprend une partie basse cylindrique (41) de diamètre correspondant au diamètre intérieur du paquet de tôles (20) et une partie haute (42) solidaire d'une face supérieure (411) de la partie basse (41), la partie haute (42) formant un nez qui définit avec les lames (30) un espace annulaire calibré (43) de stratification des parties radialement internes (122) des spires (12) .

12. Dispositif selon la revendication 11, **caractérisé en ce que** l'espace annulaire (43) présente une épaisseur radiale correspondant au diamètre du fil constituant les spires (12).

13. Dispositif selon la revendication 11 ou 12, **caractérisé en ce que** la partie haute (42) du champignon (40) présente des surfaces de guidage supérieure et inférieure (422s, 422i) guidant respectivement les parties radialement internes (122) des spires (12) des demi-phases supérieure et inférieure (10s, 10i) vers l'espace annulaire (43).

14. Dispositif selon la revendication 13, **caractérisé en ce que** les surfaces de guidage supérieure et inférieure (422s, 422i) sont constituées de pans coupés (423) de la partie haute (42) s'étendant vers le bas et l'extérieur à partir d'une face libre supérieure (424) de la partie haute (42) opposée à la partie basse (41), les pans coupés (43) de la surface de guidage inférieure (422i) étant décalés angulairement relativement à ceux de la surface de guidage supérieure (422s) et découpés plus profondément dans la partie haute (42) que ceux de la surface de guidage supérieure (422s).

15. Dispositif selon l'une quelconque des revendications 8 à 14, **caractérisé en ce que** les extrémités supérieures (31) des lames (30) arrivent toutes au même niveau axial.

## Patentansprüche

1. Verfahren zum Einziehen einer Spule (1) mit einer oberen und einer unteren Halbphase (10s, 10i) in Kerben (24), die an der inneren radialen Fläche (21) des Blechpakets (20) eines Stators der Achse (X-X') ausgebildet sind, umfassend die folgenden Schritte:
a/ Herstellen der oberen und unteren Halbphase (10s, 10i), die jeweils eine Überlagerung von sternförmigen Windungen (12) aufweisen, die jeweils mehrere Lappen (121) aufweisen, die zur Außenseite der Windung (12) vorstehen, die durch radial innere Abschnitte (122) verbunden sind, wobei die Windungen (12) der oberen Halbphase (10s) relativ zu den Windungen der unteren Halbphase (10i) winkelversetzt sind, wobei die obere Halbphase (10s) oberhalb der unteren Halbphase (10i) angeordnet ist,
b/ Übertragen der oberen und unteren Halbphase (10s, 10i) auf ein Einziehwerkzeug (2),
c/ Übertragen des Einziehwerkzeugs (2) unter eine untere axiale Fläche (22) des Blechpakets (20) des Stators, wobei die sternförmigen Windungen (12) auf der Achse (X-X') des Stators zentriert sind und sich in Ebenen erstrecken, die senkrecht zu dieser Achse oder nahe der Senkrechten sind,
d/ Einziehen der oberen und unteren Halbphase (10s, 10i) in die Kerben (24) durch progressives Verdrehen der Lappen (121) und Kippen dieser Lappen (121) in eine Richtung, die parallel zu der Achse (X-X') ist, bis die Windungen (121) der oberen Halbphase (10s) die entsprechenden Kerben (24) über die gesamte Länge dieser Kerben ausfüllen,
e/ Kippen der radial inneren Abschnitte (122) der Windungen (12) der oberen Halbphase (10s) auf einer oberen axialen Fläche (23) des Blechpakets (20), um die obere Wicklung des Stators zu bilden,
f/ Fortsetzen des Einziehens der Windungen (12) der unteren Halbphase (10i) durch Verdrehen und Kippen, bis die Windungen (12) der unteren Halbphase (10i) die entsprechenden Kerben (24) über die gesamte Länge dieser Kerben ausfüllen,
g/ Kippen der radial inneren Abschnitte (122) der Windungen (12) der unteren Halbphase (10i) auf der oberen axialen Fläche (23),
**dadurch gekennzeichnet, dass** das Kippen der radial inneren Abschnitte (122) der Windungen (12) der oberen Halbphase (10s) auf der oberen axialen Fläche (23) des Blechpakets (20) in Schritt e/ mit Hilfe von Stratifikationsorganen (51) durchgeführt wird, die diese Abschnitte radial von innen nach außen ziehen.

2. Verfahren nach Anspruch 1, **dadurch gekennzeichnet, dass** am Ende des Schrittes d/ die radial inneren Abschnitte (122) aller Windungen (12) der oberen Halbphase (10s) axial über der oberen axialen Fläche (23) des Blechpakets (20) angeordnet sind.

3. Verfahren nach Anspruch 1 oder 2, **dadurch gekennzeichnet, dass** die radial inneren Enden (122) aller Windungen (12) der unteren Halbphase (10i) am Ende des Schrittes f/ axial über der oberen axialen Fläche (23) des Blechpakets (20) angeordnet sind.

4. Verfahren nach einem der vorhergehenden Ansprüche, **dadurch gekennzeichnet, dass** das Einziehwerkzeug (2) parallele längliche Klingen (30), die in einem Kreis angeordnet sind, die freie obere Enden (31) aufweisen und die Lappen (121) der oberen und unteren Halbphase (10s, 10i) durchqueren, und einen Pilz (40) aufweist, der in der Mitte der Klingen (30) angeordnet ist, wobei der Pilz (40) und die Klingen (30) unabhängig in Längsrichtung beweglich sind, wobei das Einziehen der Windungen (12) in die Kerben (24) durch das Verschieben des Pilzes (40) und der Klingen (30) nach oben entlang der Achse des Stators durchgeführt wird, wobei die Klingen (30) gegenüber den Kerben (24) gleiten und der Pilz (40) die Windungen (12) schiebt, wobei die Klingen (30) im Schritt d/ von einer Ausgangsposition bis zu einer Anhalteposition, die axial relativ höher ist, verschoben werden, und dadurch, dass es zwischen den Schritten d/ und e/ den folgenden Schritt aufweist:
h/ Verschieben der Klingen (30) nach unten bis zu einer Zwischenposition, die relativ niedriger als die Anhalteposition ist, um das Kippen der radial inneren Abschnitte (122) der Windungen (12) der oberen Halbphase (10s) zu gestatten.

5. Verfahren nach Anspruch 4, **dadurch gekennzeichnet, dass** die radial inneren Abschnitte (122) der Windungen (12) der oberen und unteren Halbphase (10s, 10i) axial zwischen dem Pilz (40) und den Klingen (30) während des Weges des Pilzes (40) und der Klingen (30) nach oben in den Schritten d/ und f/ stratifiziert werden.

6. Verfahren nach Anspruch 4 oder 5, **dadurch gekennzeichnet, dass** die freien Enden (31) der Klingen (30) in der Zwischenposition dieser Klingen (30) axial auf einer Ebene, die in der Nähe der oberen axialen Fläche (23) des Blechpakets (20) ist, angeordnet sind.

7. Verfahren nach einem der Ansprüche 4 bis 6, **dadurch gekennzeichnet, dass** der Schritt g/ unter mithilfe einer Aufweitbacke an einer Stelle ausgeführt wird, die sich von den Schritten d/ bis f/ und h/ unterscheidet.

8. Vorrichtung zum Einziehen einer Spule (1) mit einer oberen und einer unteren Halbphase (10s, 10i) in Kerben (24), die an der inneren radialen Fläche (21) des Blechpakets (20) eines Stators der Achse (X-X') ausgebildet sind, wobei die obere und untere Halbphase (10s, 10i) jeweils eine Überlagerung von sternförmigen Windungen (12) aufweisen, die jeweils mehrere Lappen (121) aufweisen, die zur Außenseite der Windung (12) vorstehen, die durch radial innere Abschnitte (122) verbunden sind, wobei die Windungen (12) der oberen Halbphase (10s) relativ zu den Windungen der unteren Halbphase (10i) winkelversetzt sind, wobei die obere Halbphase (10s) oberhalb der unteren Halbphase (10i) angeordnet ist, wobei diese Vorrichtung ein Organ zum Halten des Blechpakets (20) in Position und ein Einziehwerkzeug (2) aufweist, das unter einer unteren axialen Fläche (21) des Blechpakets (20) angeordnet ist, wobei das Einziehwerkzeug (2) parallele längliche Klingen (30), die freie obere Enden (31) aufweisen, die in einem Kreis angeordnet sind und die Lappen (121) der Windungen (12) der oberen und unteren Halbphase (10s, 10i) durchqueren, und einen Pilz (40) aufweist, der in der Mitte der Klingen (30) angeordnet ist, wobei der Pilz (40) und die Klingen (30) unabhängig voneinander entlang der Achse des Stators ausgehend von einer Ausgangsposition in Längsrichtung beweglich sind, die sich unter dem Blechpaket (20) befindet, in der die sternförmigen Windungen (12) auf der Achse (X-X') des Stators zentriert sind und sich senkrecht zu dieser Achse oder nahe der Senkrechten erstrecken, wobei die Klingen (30) gegenüber den Kerben (24) gleiten und der Pilz (40) die Windungen (12) durch progressives Verdrehen der Lappen (121) der Windungen (12) und Kippen dieser Lappen (121) parallel zu der Achse (X-X') in die Kerben (24) schiebt, wobei die Einziehvorrichtung auch Mittel zum Kippen der radial inneren Abschnitte (122) der Windungen (12) der unteren und oberen Halbphase (10i, 10s) auf einer oberen axialen Fläche (23) des Blechpakets (20) über den oberen Enden (31) der Klingen (30) aufweist, **dadurch gekennzeichnet, dass** diese Mittel eine Stratifikationsvorrichtung (50) aufweisen, die über dem Blechpaket (20) angeordnet ist, die mit Stratifikationsorganen (51) versehen ist, die gebaut und angeordnet sind, um die radial inneren Abschnitte (122) der Windungen (12) der oberen Halbphase (10s) radial von innen nach außen ziehen.

9. Vorrichtung nach Anspruch 8, **dadurch gekennzeichnet, dass** die Stratifikationsvorrichtung (50) einen festen Führungskranz (52), der das Blechpaket (20) umgibt und mit Führungsnuten (521) versehen ist, einen Betätigungskranz (53), der den Führungskranz (52) überlagert, der mit Betätigungsnuten (531) versehen ist, und ein Stellglied aufweist, das den Betätigungskranz (53) relativ zum Führungskranz (52) selektiv drehbewegt, wobei die Stratifikationsorgane (51) Finger sind, die in den Führungsnuten (521) gleiten und Stifte (511) aufweisen, die in die Betätigungsnuten (531) eingreifen.

10. Vorrichtung nach Anspruch 9, **dadurch gekennzeichnet, dass** die Führungsnuten (521) radial sind und die Betätigungsnuten (531) schräg relativ zu den Führungsnuten (521) sind.

11. Vorrichtung nach einem der Ansprüche 8 bis 10, **dadurch gekennzeichnet, dass** der Pilz (40) einen zylindrischen unteren Teil (41) mit einem Durchmesser, der dem Innendurchmesser des Blechpakets (20) entspricht, und einen oberen Teil (42) aufweist, der mit einer oberen Fläche (411) des unteren Teils (41) fest verbunden ist, wobei der obere Teil (42) eine Nase bildet, die mit den Klingen (30) einen kalibrierten ringförmigen Raum (43) zur Stratifikation der radial inneren Abschnitte (122) der Windungen bildet (12).

12. Vorrichtung nach Anspruch 11, **dadurch gekennzeichnet, dass** der ringförmige Raum (43) eine radiale Dicke aufweist, die dem Durchmesser des Drahtes entspricht, der die Windungen (12) bildet.

13. Vorrichtung nach Anspruch 11 oder 12, **dadurch gekennzeichnet, dass** der obere Teil (42) des Pilzes (40) eine obere und untere Führungsfläche (422s, 422i) aufweist, die jeweils die radial inneren Abschnitte (122) der Windungen (12) der oberen und unteren Halbphase (10s, 10i) in Richtung des ringförmigen Raums (43) führen.

14. Vorrichtung nach Anspruch 13, **dadurch gekennzeichnet, dass** die obere und untere Führungsfläche (422s, 422i) aus geschnittenen Flächen (423) des oberen Teils (42) gebildet sind, die sich ausgehend von einer oberen freien Fläche (424) des oberen Teils (42), das dem unteren Teil (41) gegenüberliegt, nach unten und nach außen erstrecken, wobei die geschnittenen Flächen (43) der unteren Führungsfläche (422i) relativ zu jenen der oberen Führungsfläche (422s) winkelversetzt sind und tiefer in dem oberen Teil (42) als jene der oberen Führungsfläche (422s) geschnitten sind.

15. Vorrichtung nach einem der Ansprüche 8 bis 14, **dadurch gekennzeichnet, dass** die oberen Enden (31) der Klingen (30) alle an der gleichen axialen Ebene ankommen.

## Claims

1. Method for inserting a winding (1) comprising upper and lower half-phases (10s, 10i),into notches (24) formed on the inner radial face (21) of the bundle of plates (20) of a stator of axis (X-X'), comprising the following steps:
a/ production of the upper and lower half-phases (10s, 10i), each comprising a super position of star-configuration turns (12) each having a plurality of lobes (121) protruding outward from the turn (12) linked by radially inner parts (122), the turns (12) of the upper half-phase (10s) being offset angularly in relation to the turns of the lower half-phase (10i), the upper half-phase (10s) being arranged above the lower half-phase (10i),
b/ transfer of the upper and lower half-phases (10s, 10i) onto an insertion tool (2),
c/ transfer of the insertion tool (2) under a bottom axial face (22) of the bundle of plates (20) of the stator, the star-configuration turns (12) being centred on the axis (X-X') of the stator and extending in planes at right angles to this axis or close to the right angle,
d/ insertion of the upper and lower half-phases (10s, 10i) into the notches (24) by progressive twisting of the lobes (121) and tilting of these lobes (121) in a direction parallel to the axis (X-X'), until the turns (121) of the upper half-phase (10s) fill the corresponding notches (24) over all the length of these notches,
e/ tilting of the radially inner parts (122) of the turns (12) of the upper half-phase (10s) onto a top axial face (23) of the bundle of plates (20), to form the upper lead-out wire of the stator,
f/ continuation of the insertion of turns (12) of the lower half-phase (10i) by twisting and tilting until the turns (12) of the lower half-phase (10i) fill the corresponding notches (24) over all the length of these notches,
g/ tilting of the radially inner parts (122) of the turns (12) of the lower half-phase (10i) onto the top axial face (23),
**characterized in that** the tilting of the radially inner parts (122) of the turns (12) of the upper half-phase (10s) onto the top axial face (23) of the bundle of plates (20) in the step e/ is performed using bedding members (51) radially pulling these said parts from the inside to the outside.

2. Method according to Claim 1, **characterized in that**, at the end of step d/, the radially inner parts (122) of all the turns (12) of the upper half-phase (10s) are situated axially above the top axial face (23) of the bundle of plates (20).

3. Method according to Claim 1 or 2, **characterized in that** the radially inner ends (122) of all the turns (12) of the lower half-phase (10i) are situated axially above the top axial face (23) of the bundle of plates (20) at the end of step f/.

4. Method according to any one of the preceding claims, **characterized in that** the insertion tool (2) comprises parallel longitudinal blades (30) arranged in a circle, having free top ends (31), and passing through the lobes (121) of the upper and lower half-phases (10s, 10i), and a mushroom (40) arranged at the centre of the blades (30), the mushroom (40) and the blades (30) being longitudinally mobile, independently, the insertion of the turns (12) into the notches (24) being produced by displacement of the mushroom (40) and of the blades (30) upwards along the axis of the stator, the blades (30) sliding facing the notches (24) and the mushroom (40) pushing the turns (12), the blades (30) being displaced in the step d/ from a starting position to an axially relatively higher stop position, and **in that** it comprises, between the steps d/ and e/, the following step:
h/ downward displacement of the blades (30) to an intermediate position, relatively lower than the stop position, to allow the tilting of the radially inner parts (122) of the turns (12) of the upper half-phase (10s) .

5. Method according to Claim 4, **characterized in that** the radially inner parts (122) of the turns (12) of the upper and lower half-phases (10s, 10i) are bedded axially between the mushroom (40) and the blades (30) during the upward travel of the mushroom (40) and of the blades (30) in the steps d/ and f/.

6. Method according to Claim 4 or 5, **characterized in that** the free ends (31) of the blades (30), in the intermediate position of these blades (30), are situated axially at a level close to the top axial face (23) of the bundle of plates (20).

7. Method according to any one of Claims 4 to 6, **characterized in that** the step g/ is performed at a different station from steps d/ to f/ and h/, using an expansion jaw.

8. Device for inserting a winding (1) comprising upper and lower half-phases (10s, 10i), into notches (24) formed on the interior radial face (21) of the bundle of plates (20) of a stator of axis (X-X'), the upper and lower half-phases (10s, 10i) each comprising a super position of star-configuration turns (12) each having a plurality of lobes (121) protruding outward from the turn (12) linked by radially inner parts (122), the turns (12) of the upper half-phase (10s) being offset angularly in relation to the turns of the lower half-phase (10i) and the upper half-phase (10s) being arranged above the lower half-phase (10i), this device comprising a member for holding the bundle of plates (20) in position, and an insertion tool (2) arranged under a bottom axial face (21) of the bundle of plates (20), the insertion tool (2) comprising parallel longitudinal blades (30) having free top ends (31), arranged in a circle and passing through the lobes (121) of the turns (12) of the upper and lower half-phases (10s, 10i), and a mushroom (40) arranged at the centre of the blades (30), the mushroom (40) and the blades (30) being mobile longitudinally, mutually independently, along the axis of the stator, from the starting position situated under the bundle of plates (20), in which the star-configuration turns (12) are centred on the axis (X-X') of the stator and extend at right angles to this axis or close to the right angle, the blades (30) sliding facing the notches (24) and the mushroom (40) pushing the turns (12) into the notches (24) by progressive twisting of the lobes (121) of the turns (12) and tilting of the lobes (121) parallel to the axis (X-X'), the insertion device also comprising means for tilting the radially inner parts (122) of the turns (12) of the lower and upper half-phases (10i, 10s) onto a top axial face (23) of the bundle of plates (20) above the top ends (31) of the blades (30), **characterized in that** said means comprise a bedding device (50) arranged above the bundle of plates (20) provided with bedding members (51) constructed and arranged to radially pull the radially inner parts (122) of the turns (12) of the upper half-phase (10s) from the inside to the outside.

9. Device according to Claim 8, **characterized in that** the bedding device (50) comprise a fixed guiding crown ring (52) surrounding the bundle of plates (20) and provided with guiding grooves (521), an actuation crown ring (53) superposed on the guiding crown ring (52) provided with actuation grooves (531), and an actuator selectively displacing in rotation the actuation crown ring (53) in relation to the guiding crown ring (52), the bedding members (51) being fingers sliding in the guiding grooves (521) and comprising slugs (511) engaged in the actuation grooves (531).

10. Device according to Claim 9, **characterized in that** the guiding grooves (521) are radial and the actuation grooves (531) are oblique in relation to the guiding grooves (521).

11. Device according to any one of Claims 8 to 10, **characterized in that** the mushroom (40) comprises a cylindrical bottom part (41) of a diameter corresponding to the inner diameter of the bundle of plates (20) and a top part (42) secured to a top face (411) of the bottom part (41), the top part (42) forming a nose which defines, with the blades (30), a gauged annular bedding space (43) for the radially inner parts (122) of the turns (12).

12. Device according to Claim 11, **characterized in that** the annular space (43) has a radial thickness corresponding to the diameter of the wire forming the turns (12).

13. Device according to Claim 11 or 12, **characterized in that** the top part (42) of the mushroom (40) has top and bottom guiding surfaces (422s, 422i) respectively guiding the radially inner parts (122) of the turns (12) of the upper and lower half-phases (10s, 10i) towards the annular space (43).

14. Device according Claim 13, **characterized in that** the top and bottom guiding surface (422s, 422i) are composed of cut flats (423) of the top part (42) extending downwards and the outside from a top free face (424) of the top part (42) opposite the bottom part (41), the cut flats (43) of the bottom guiding surface (422i) being offset annularly in relation to those of the top guiding surface (422s) and cut more deeply into the top part (42) than those of the top guiding surface (422s).

15. Device according to any one of Claims 8 to 14, **characterized in that** the top ends (31) of the blades (30) all arrive at the same axial level.
